# EUROPÄISCHE PATENTSCHRIFT

(11) **EP 0 544 626 B1**
(45) Veröffentlichungstag und Bekanntmachung des Hinweises auf die Patenterteilung: **24.07.1996**
(21) Anmeldenummer: 92810928.9
(22) Anmeldetag: 27.11.1992
(51) Int. Cl.: G01N 3/00, G01N 3/06

(54) **Verfahren und Prüfelement zur Überprüfung des Alterungszustandes von Verankerungselementen**
Method and test element for monitoring ageing of an anchor element
Procédé et élément de test pour le contrôle du vieillissement des éléments d'ancrage

(30) Priorität: 28.11.1991 CH 3493/91
(43) Veröffentlichungstag der Anmeldung: 02.06.1993
(73) Patentinhaber: Mösch, Thomas, CH-8182 Hochfelden (CH)
(72) Erfinder: Mösch, Thomas, CH-8182 Hochfelden (CH)
(74) Vertreter: Werffeli, Heinz R., Dipl.-Ing.ETH.

(56) Entgegenhaltungen:
- GB-A- 678 003
- GB-A- 716 572
- GB-A- 726 279
- US-A- 4 322 981

## Beschreibung

Die Erfindung betrifft ein Verfahren zur Uberprüfung des Alterungszustandes von hinter Fassadenverkleidungselementen angeordneten, die letzteren in ihrer Lage haltenden Verankerungselementen, sowie ein Prüfelement zur Durchführung des Verfahrens.

Fassadenverkleidungselemente werden normalerweise mittels Verankerungselementen an der zu verkleidenden Fassade aufgehängt. Um den Alterungszustand dieser Verankerungselemente nach erfolgter Montage später überprüfen zu können ist es erforderlich, ein entsprechendes Fassadenverkleidungselement vollständig zu demontieren, was in den meisten Fällen sehr umständlich und zeitraubend, und damit auch relativ teuer ist. Um sicher zu sein, dass später nicht ein nachträglich als Ersatz für ein zur Überprüfung demontiertes Verankerungselement eingesetztes neues Verankerungselement fälschlicherweise als Referenzelement für die übrigen Verankerungselemente auf seinen Alterungszustand überprüft wird, ist es daher erforderlich, ein derart demontiertes Verankerungselement nach erfolgter Uberprüfung wieder am ursprünglichen Einsatzort einzubauen, was äusserst aufwendig und umständlich ist.

Aufgabe der vorliegenden Erfindung ist daher insbesondere die Schaffung eines Verfahrens, welches diese Nachteile nicht aufweist, das heisst ohne Demontage von Fassadenverkleidungselementen durchführbar ist, und die Uberprüfbarkeit des Alterungszustandes der Verankerungselemente stark vereinfacht.

Diese Aufgabe wird bei einem Verfahren der eingangs genannten Art erfindungsgemäss nach dem Kennzeichen des Patentanspruchs 1 gelöst.

Dabei ist es zweckmässig, wenn die in der Fassadenverkleidung vorgesehene Öffnung zur Einführung und Entnahme des zu überprüfenden Verankerungselementprüflings verschliessbar ist.

Gegenstand der Erfindung ist ferner ein Prüfelement zur Durchführung des erfindungsgemässen Verfahrens nach Patentanspruch 3.

Nachstehend wird die Erfindung anhand der Zeichnung beispielsweise näher erläutert. Es zeigt:
- Fig.1: einen Vertikalschnitt durch eine Fassadenverkleidung mit dahinter angeordnetem Prüfelement;
- Fig.2: im Grundriss die in Fig. 1 dargestellte Stelle;
- Fig.3: einen Schnitt längs der Linie III-III in Figur 2
- Fig.4: in grösserem Massstab eine Draufsicht auf das in den Fig. 1 und 2 eingezeichnete Prüfelement;
- Fig.5: einen Schnitt längs der Linie V-V in Figur 4;
- Fig.6: eine Draufsicht analog Fig. 4 auf eine zweite beispielsweise Ausführungsform eines erfindungsgemässen Prüfelementes;
- Fig.7: einen Schnitt längs der Linie VII-VII in Fig. 6; und
- Fig.8: eine Draufsicht analog Fig. 6 auf eine dritte beispielsweise Ausführungsform eines erfindungsgemässen Prüfelementes mit einem eingekerbten Verankerungselement.

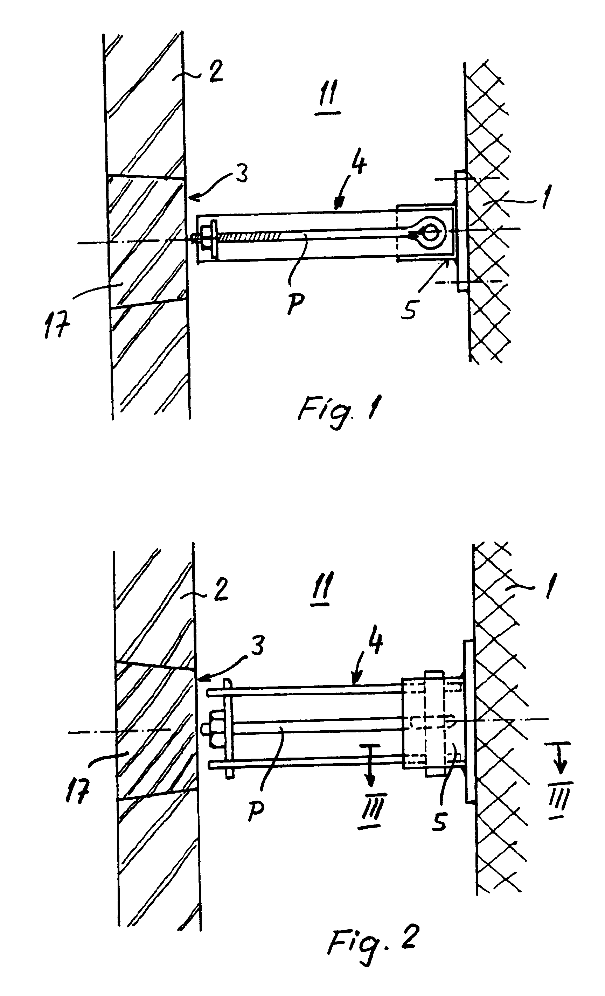

Wie aus den Figuren 1,2 und 3 ersichtlich, sind der Gebäudefassade 1 auf bekannte Weise mit Hilfe von Verankerungselementen eine Vielzahl von plattenförmigen Fassadenverkleidungselementen 2 vorgehängt.

An mindestens einer Stelle der Fassadenverkleidung wird ein mit einer von aussen verschliessbaren Offnung 3 versehenes Verkleidungselement 2 verwendet. Die Offnung 3 ist derart bemessen, dass sie nach erfolgter Montage der Fassadenverkleidungselemente 2 jederzeit auf einfache Weise die Entnahme und Wiedereinsetzung eines Prüfelementes 4 aus bzw. in eine an der Fassade 1 befestigte Halterung 5 erlaubt.

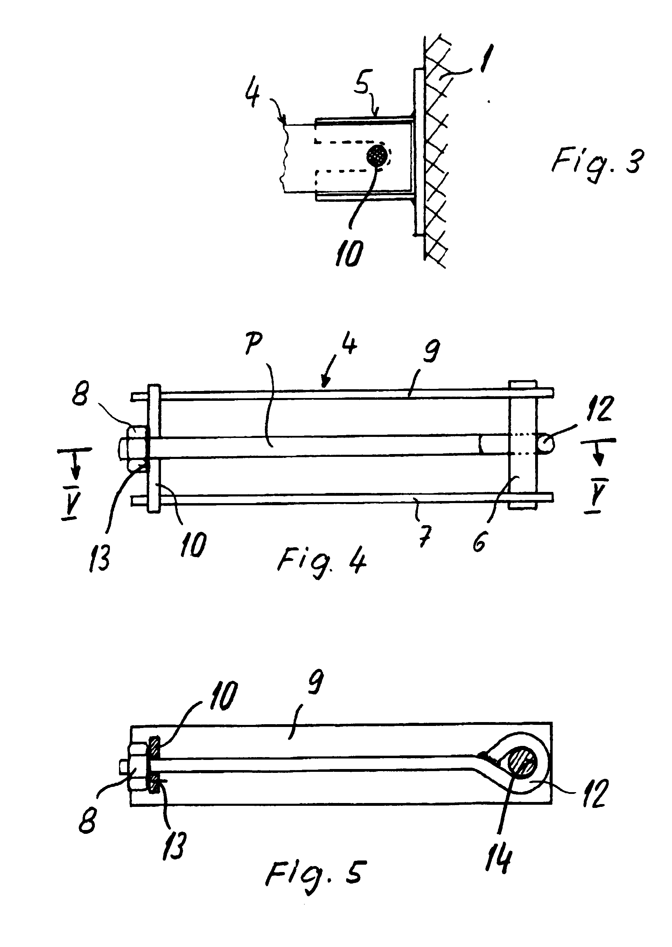

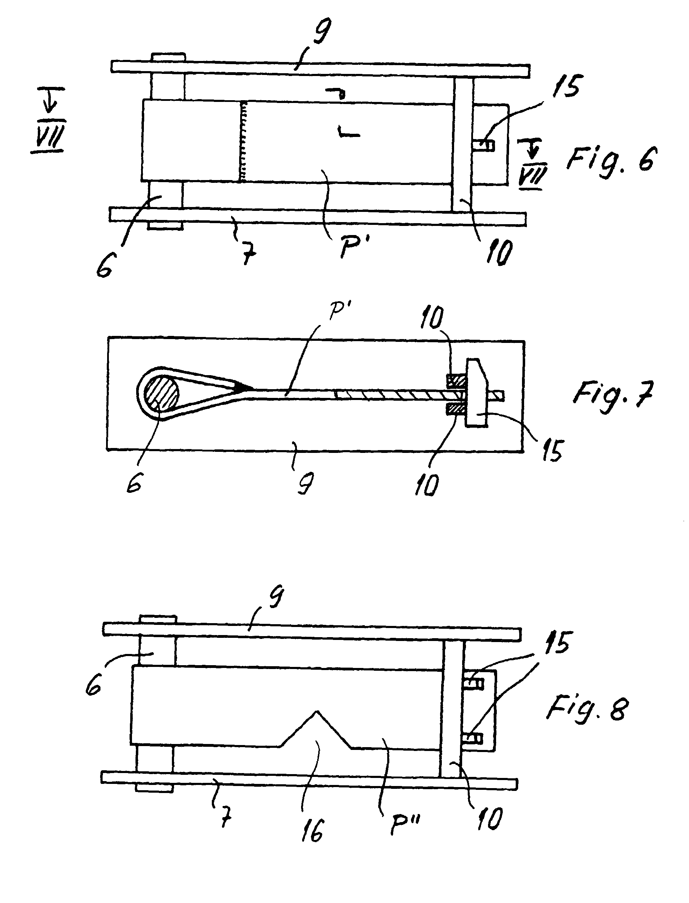

Dieses Prüfelement 4 besteht, wie insbesondere aus den Figuren 4 und 5 ersichtlich, aus einem vorzugsweise sicherheitshalber statisch überdimensionierten Spannteil 6,7,9,10 zur Aufnahme und Halterung eines zu überwachenden Verankerungsprüflings P in gespanntem Zustand. Ferner ist ein Verstellmittel, im vorliegenden Fall eine Schraubenmutter 8, zur Einstellung des Spannungszustandes des zu überwachenden Verankerungsprüflings P auf einen vorbestimmten Wert, vorgesehen.

Der derart zu überwachende Verankerungselementprüfling P ist gegenüber den die Fassadenverkleidungselemente 2 tragenden Verankerungselementen aus räumlichen Platzgründen meist etwas verkürzt, ansonsten aber mindestens bezüglich Korrosion und/oder Festigkeit kritischen Stellen identisch ausgebildet und aus dem gleichen Material bestehend. Diese kritischen Stellen (z.B. Schweissungen, Kerben etc) können auch so ausgebildet sein, dass diese für den Verankerungselementprüfling eine grössere Schwächung darstellen, als das identische Detail bei dem die Fassadenverkleidungselemente 2 tragenden Verankerungselemente. Der Prüfling P sollte möglichst in der genau gleichen Lage wie die die Fassadenverkleidungselemente 2 tragenden Verankerungselemente im Zwischenraum 11 angeordnet und der Witterung ausgesetzt werden.

Da der Spannteil 6 aus Kostengründen z.B. aus anderem billigerem Material besteht, als der Verankerungselementprüfling P ist zur Vermeidung von elektrochemischen Vorgängen zwischen diesen beiden unterschiedlichen Materialien zwischen der Spannmutter 8 und dem Abstützteil 10 sowie der Innenseite des Oesenteiles 12 und dem Einhängbolzen 6 eine Isolation 13 bzw. 14 angeordnet.

Da man das Gewicht der Fassadenverkleidungselemente 2 genau kennt, ist damit auch die auf die eingesetzten Verankerungselemente wirkende Zugspannung bekannt. Diese somit bekannte Zugspannung wird nun mit Hilfe eines Drehmomentschlüssels über die Einstellmutter 8 auf den im Spannteil 6,7,9,10 eingesetzten Verankerungselementprüfling P wirkend, eingestellt.

Die Zugspannung kann auch wie z.B. aus den Figuren 6 und 7 ersichtlich mit Hilfe eines Keiles 15 aufgebracht werden, was insbesondere dann vorteilhaft ist, wenn der Verankerungselementprüfling P' aus einem Flachstahl geformt wurde.

Der Verankerungselementprüfling P" kann, wie z.B. aus Fig. 8 ersichtlich, auch mit einer Kerbe 16 oder dergleichen versehen sein.

Selbstverständlich ist es auch möglich, sicherheitshalber eine grössere Kraft auf den im Prüfelement 4 zu überwachenden Verankerungselementprüfling P einwirken zu lassen, als diejenige Kraft, welche auf die die Fassadenverkleidungselemente 2 tragenden Verankerungselemente wirkt.

Das derart vorbereitete Prüfelement 4 kann nach erfolgter Montage der Fassadenverkleidung 2 durch die Offnung 3 hinter die Fassadenverkleidung eingeführt und dort über eine Halterung 5 an der Fassade 1 befestigt werden.

Nach erfolgter Montage des Prüfelementes 4 hinter der Fassadenverkleidung 2 wird die Offnung 3 mittels eines in die letztere einsetzbaren Deckels 17 verschlossen.

Soll nun nach einigen Jahren der Alterungszustand der Verankerungselemente überprüft werden, dann entnimmt man durch die in der Fassadenverkleidung vorgesehene Offnung 3 auf einfache Weise das Prüfelement 4 und prüft im Labor den Alterungszustand des den gleichen Umwelt- und Spannungsbedingungen wie die Verankerungselemente ausgesetzten Verankerungsprüflings P. Nach erfolgter Uberprüfung des letzteren kann dieses bzw. das Prüfelement 4 wieder auf einfache Weise erneut über die verschliessbare Offnung 3 hinter der Fassadenverkleidung 2 angeordnet werden.

Selbstverständlich ist es auch möglich, an mehreren verschiedenen Stellen der Fassadenverkleidung 2, hinter derselben, Prüfelemente 4 anzuordnen.

## Patentansprüche

1. Verfahren zur Uberprüfung des Alterungszustandes von hinter Fassadenverkleidungselementen (2) angeordneten, die letzteren in ihrer Lage haltenden Verankerungselementen, dadurch gekennzeichnet, dass man an mindestens einer Stelle der betreffenden Fassadenverkleidung, (2), hinter derselben, zwischen der letzteren und der zugeordneten Gebäudefassade (1) einen zu den eingesetzten Verankerungselementen mindestens bezüglich der kritischen Stellen identisch, oder kritischer ausgebildeten, gegebenenfalls in der Länge abweichenden, unter gleicher oder höherer Zugspannung stehenden Verankerungselementprüfling (P) anordnet, welcher zu seiner Uberprüfung in gespanntem Zustand durch eine Öffnung (3) in der Fassadenverkleidung (2) herausnehmbar ist.

2. Verfahren nach Anspruch 1, dadurch gekennzeichnet, dass die in der Fassadenverkleidung (2) vorgesehene Öffnung (3) zur Einführung und Entnahme des zu überprüfenden Verankerungselementprüflings (P) verschliessbar ist.

3. Prüfelement zur Durchführung des Verfahrens nach Anspruch 1, dadurch gekennzeichnet, dass es einen Spannteil (6,7,9,10) zur Aufnahme und Halterung mindestens eines zu überwachenden Verankerungselementprüflings (P) in gespanntem Zustand, sowie Verstell- oder Einstellmittel zur Einstellung des Spannungszustandes des zu überwachenden Verankerungselementprüflings (P, P',P") auf einen vorbestimmten Wert, aufweist.

## Claims

1. A method of checking the ageing state of anchoring element which are arranged behind facade facing element; (2) and hold the latter in their position, characterised in that an anchoring element test piece (P) - which is, at least with regard to the critical sites, constructed to be identical to or more critical than the positioned anchoring elements, is optionally different in length therefrom, and is under the same or greater tensile stress - is arranged at at least one site of the relevant facade facing (2) - behind the latter, between the latter and the associated building facade (1) - and is removable in the tensioned state through an opening (3) in the facade facing (2) so that it can be checked.

2. A method in accordance with claim 1, characterised in that the opening (3) in the facade facing (2) for introducing and removing the anchoring element test piece (P) to be checked is closable.

3. A test element for implementing the method in accordance with Claim 1, characterised in that it has a clamping pan (6, 7, 9, 10) for receiving and securing at least one anchoring element test piece (P) in the tensioned state which is to be monitored, as well as adjustment means for adjusting - to a predetermined value - the state of stress of the anchoring element test piece (P, P', P") to be monitored

## Revendications

1. Procédé pour le contrôle de l'état de vieillissement d'éléments d'ancrage disposés derrière des éléments de bardage (2), qui maintiennent ces derniers dans leur position, caractérisé en ce qu'on dispose à au moins un endroit du bardage (2) en question, derrière ce dernier, entre ce dernier et la façade de bâtiment correspondante (1), un échantillon d'élément d'ancrage (P) soumis à une contrainte de traction identique ou supérieure, dont la réalisation, par rapport à celle des éléments d'ancrage mis en oeuvre, est identique au moins aux endroits critiques, ou plus critique, dont la hauteur diverge éventuellement, qui peut être retiré pour son contrôle à l'état précontraint à travers une ouverture (3) pratiquée dans le bardage (2).

2. Procédé selon la revendication 1, caractérisé en ce que l'ouverture (3) prévue dans le bardage (2) pour l'introduction et le retrait de l'échantillon d'élément d'ancrage (P) peut être fermée.

3. Elément de contrôle pour la mise en oeuvre du procédé selon la revendication 1, caractérisé en ce qu'il présente un élément de tension (6, 7, 9, 10) pour la réception et la fixation à l'état précontraint d'au moins un échantillon d'élément d'ancrage (P) à surveiller, ainsi qu'un moyen d'ajustage ou de réglage pour régler à une valeur prédéterminée l'état précontraint de l'échantillon d'élément d'ancrage (P, P', P") à surveiller.
